# EUROPEAN PATENT APPLICATION

(11) **EP 1 693 732 A1**
(43) Date of publication of application: **23.08.2006**
(21) Application number: 05003383.6
(22) Date of filing: 17.02.2005
(51) Int. Cl.: G06F 1/16, H04B 1/38

(54) **A radio modem**

(71) Applicant: SIEMENS AKTIENGESELLSCHAFT, 80333 München (DE)
(72) Inventor: Barz, Jan, 14109 Berlin (DE); Braune, Jörg, 13507 Berlin (DE); Gunke, Jan, 10243 Berlin (DE)

(57) **Abstract**

A radio modem (10) comprises: a circuit board (13) further comprising a connector (6) for connecting the radio modem (10) to a computer; a receiver (2) and a transmitter (2); an antenna (1) or a high frequency connector for an antenna assembled on the circuit board (13). The radio modem (10) has an elongated form, the connector (6) forming one end (A). Furthermore, at least one of the following: the antenna (1), the high frequency connector, or the receiver (2), is located closer to another end (B) of the radio modem (10) than to the first end (A).

## Description

### Field of the invention

The invention relates to radio modems comprising a circuit board, a receiver, a transmitter, and an antenna or a high frequency connector for an antenna assembled on the circuit board.

### Background art

Most radio modems for cellular systems known in prior art are external devices. An alternative to an external radio modem is a modem that is an internal card, such as a PCMCIA card.

In contrast to radio modems for cellular systems, there are many WLAN or Bluetooth radio modems that have a compact form, usually the form of a "stick", and that are connectable to a computer via a USB interface. These devices are adequate for radio communication over a very small distance only and therefore apt mostly for indoor use only.

It remains a task underlying the invention to improve a radio modem for a cellular system that could be used with a computer and that is external to it. The radio modem should be suitable for use in a cellular network, such as in a GSM, CDMA, or UMTS cellular network.

### Summary of the invention

This objective can be achieved as set out in the independent claim.

The dependent claims describe various advantageous embodiments of the invention.

### Advantages of the invention

If a radio modem that comprises a circuit board, a receiver, a transmitter, and an antenna or a high frequency connector for an antenna assembled on the circuit board, has an elongated form so that a connector for connecting the radio modem to a computer forms one end, and if the antenna, the high frequency connector, or the receiver is located closer to another end of the radio modem than to the first end, the adverse effect of interference on the receive path caused by electromagnetic waves from the computer can be reduced.

If the radio modem further comprises at least one buffer capacitor physically located between the connector and the transmitter, the peak power output of the transmitter can be increased.

If the radio modem comprises a USB connector, radio modem can be connected to a computer via an USB port of the computer. This is particularly advantageous, since a USB port is currently a de-facto standard and can be found in practically any computer.

By adding connecting means for a headset and/or a microphone to the radio modem, the connecting means located between the connector and the antenna, the high frequency connector, or the receiver, the distance of these components sensitive for electromagnetic disturbances from the computer can be increased in a meaningful way.

If said connecting means is a Bluetooth chip, the comfort of use may be increased since a headset and/or a microphone can be used wirelessly.

If the radio modem further comprises receiving means for a smart card, located between the connector and the antenna, the high frequency connector or the receiver, the distance of these components sensitive for electromagnetic disturbances from the computer can be further increased still avoiding enlarging the size of the radio modem in a redundant way.

### Detailed description

The maximum transmitting power of a WLAN or Bluetooth transmitter is less than that of a transmitter suitable for use in a cellular network. In GSM, for example, it has been specified that the maximum up-link transmitting power of a transmitter should be 2 W in a burst. Therefore, the electronic design of a prior art WLAN or Bluetooth transmitter cannot be directly used.

A consequence of the high transmission power required is that the radio modem, especially the transmitter in it, needs much current. The present inventor has estimated the peak current consumption to be up to 2 A.

This peak value is much more than the upper limit for an average current intake 500 mA specified in the USB 2.0 specifications, for example, allows. This difference may become particularly disturbing if the radio modem were used in a multi-slot communication mode, i.e. that the transmitter would send data in more than one time slots in a burst, since then the radio modem would exceed the average limit of 500 mA current intake four-fold for a number of time slots. For GSM networks, multi-slot communication mode has been defined for the General Packet Radio Service GPRS and for the Enhanced Data Rates GSM Evolution EDGE, for example.

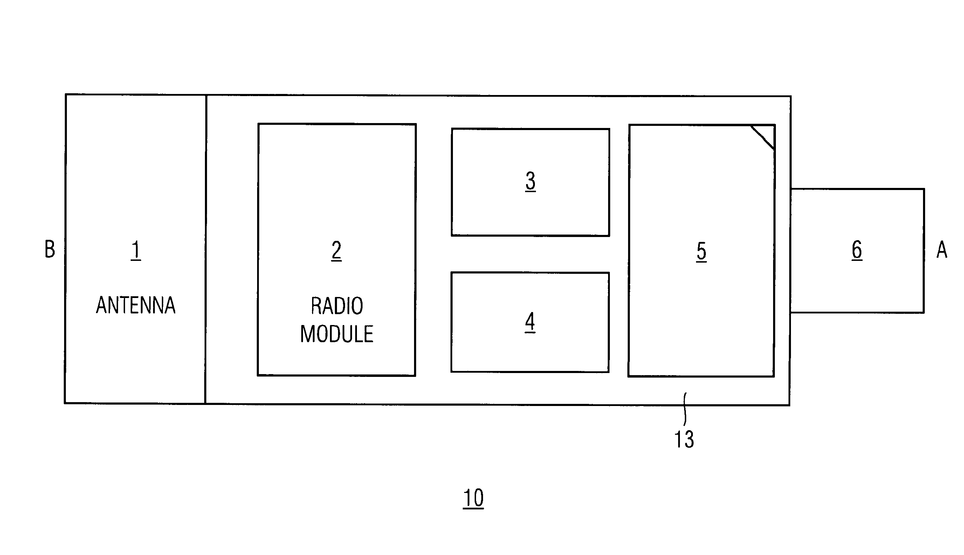

The only Figure shows a radio modem 10. The radio modem 10 comprises an antenna 1 that has been arranged directly next to radio module 2 in order to minimize attenuation in the transmit-receive part. The radio module 2 comprises a radio receiver, a radio transmitter, and a base band unit.

The antenna 1 is placed on the other side of the radio modem 10 than the USB connector. The antenna 1 will thus be located further away from the computer to which the radio modem 10 is connected. In this way, the degradation of the received radio frequency signal because of interfering electromagnetic waves from the computer can be minimized. The USB connector 6 serves for connection to the computer, from which operating current is received. The USB connector is used for data transfer to and from the computer too. A USB controller (not shown in Figure) for the radio modem 10 is implemented of the back side of the circuit board 13.

The antenna 1 may be a foldable strip that has been embedded in a plastic housing of the radio modem 10 (omitted from the Figure). Instead of comprising an antenna 1 directly on the Printed Circuit Board PCB 13, the PCB 13 may comprise a high frequency (HF) connector for the antenna, to which an external antenna may be connected.

The impedance of the antenna 1 is matched to the PCB 13. The buffer zone 4 consists of at least one buffer capacitor that enable the peak current of 2 A in a burst. The middle current intake of the radio module 10 can thus be maintained at 500 mA level or even less.

The PCB 13 may further comprise connecting means 3, such as a pair of connectors, two mechanical slots or a Bluetooth chip, for headset and microphone. Further, the PCB 13 preferably comprises receiving means 5, such as a slot, for a smart card, such as a Subscriber Identity Module or User Identity Module, the smart card comprising subscriber data for the cellular network.

By reserving the means 3 and 5 in the PCB between the radio module 2 and the USB connector, the distance of the GSM receiver integrated in the radio module 2 can be increased from the computer, which contributes in eliminating disturbances at the receiver. The distance between the antenna 1 and the computer is increased too.

Because the radio module 2 is further away from the computer, the cooling of the radio modem 10 can be improved. This is an advantage particularly important when the radio module 2 is used with a high output power, especially when the output power can be up to 2 W of high frequency power in a burst for one or more time slots.

Furthermore, by suitably dimensioning the PCB 13 to show an elongated form, an optimal construction length can be achieved so that the radiation characteristics of the antenna are essentially improved. For example, when the antenna 1 is used to transmit on a GSM 900 MHz band, the PCB 13 acts as the main radiating element. In the GSM 1800 MHz band, the antenna 1 acts as the main radiating element. In both cases the length of the PCB 13 nevertheless has an large effect on the resulting bandwidth. For example, for the GSM 900 MHz band, to obtain an optimum bandwidth for the antenna 1 it would be necessary for the PCB 13 to have a length of 12-13 cm. For GSM 1800 MHz band, the PCB 13 can be shorter.

## Claims

1. A radio modem (10), comprising:
- a circuit board (13) further comprising a connector (6) for connecting the radio modem (10) to a computer;
- a receiver (2) and a transmitter (2);
- an antenna (1) or a high frequency connector for an antenna assembled on the circuit board (13);
**characterized in that**:
the radio modem (10) has an elongated form, the connector (6) forming one end (A); and at least one of the following: the antenna (1), the high frequency connector, or the receiver (2) is located closer to another end (B) of the radio modem (10) than to the first end (A).

2. A radio modem (10) according to claim 1, further **comprising**: at least one buffer capacitor (4) physically located between the connector (6) and the transmitter (2).

3. A radio modem (10) according to claim 1 or 2, **wherein:** the connector (6) is a USB connector.

4. A radio modem (10) according to any one of the preceding claims, further **comprising:** connecting means (3) for a headset and/or a microphone, located between the connector (6) and the antenna (1), the high frequency connector, or the receiver (2).

5. A radio modem (10) according to claim 4, **wherein**: said connecting means (3) is a Bluetooth chip.

6. A radio modem (10) according to any one of the preceding claims, further **comprising:** receiving means (5) for a smart card located between the connector (6) and the antenna (1), the high frequency connector, or the receiver (2).

7. A radio modem (10) according to any one of the preceding claims, **wherein:** the receiver (2) and the transmitter (2) are adapted to communicate with a cellular network.

8. A radio modem (10) according to 7, **wherein:** said cellular network is a GSM, CDMA, or UMTS network.

9. A radio modem (10) according to any one of the preceding claims, **wherein:** said antenna (1) is a foldable strip that has been embedded in a plastic housing of the radio modem (10).
